# EUROPEAN PATENT APPLICATION

(11) **EP 4 819 239 A1**
(43) Date of publication of application: **07.10.2026**
(21) Application number: 24910760.8
(22) Date of filing: 12.12.2024
(51) Int. Cl.: H01M 4/505, H01M 4/525, H01M 4/485, H01M 4/36, H01M 4/62, H01M 4/04, H01M 10/054, C01G 53/00

(54) **HIGH-CAPACITY, LOW-RESIDUAL SODIUM SODIUM-ION BATTERY LAYERED POSITIVE ELECTRODE MATERIAL, PREPARATION METHOD THEREFOR, AND SODIUM-ION BATTERY**

(30) Priority: 25.12.2023 CN 202311803899
(71) Applicant: BASF Shanshan Battery Materials Co., Ltd., Changsha, Hunan 410205 (CN)
(72) Inventor: YUAN, Xinguang, Changsha, Hunan 410205 (CN); HU, Jin, Changsha, Hunan 410205 (CN); DING, Chuxiong, Changsha, Hunan 410205 (CN); CHU, Manman, Changsha, Hunan 410205 (CN)
(74) Representative: Kovári, Zoltán
(86) International application number: PCT/CN2024/138894
(87) International publication number: WO 2025/139829

(57) **Abstract**

Provided is a high-capacity and low-residual-sodium layered cathode material for a sodium-ion battery, with a chemical formula of NaₐM1_{b}Ni_{w}FeₓMn_{y}Cu_{z}M2_{1-w-x-y-z}O₂, where M1 includes one or more selected from the group consisting of Ca, Li, and K; M2 includes one or more selected from the group consisting of Mg, Zn, Al, Zr, Ti, Nb, Mo, Y, Ta, W, Sr, Ba, B, and P; 0.85 ≤ a < 0.98, 0 < b ≤ 0.05, and 0.90 ≤ a + b ≤ 0.98; and w ≥ 0.1, x ≥ 0.1, y ≥ 0.1, z ≥ 0, and 0.9 ≤ w + x + y + z ≤ 1.0.

## Description

### CROSS REFERENCE TO RELATED APPLICATION

The present application claims the priority of Chinese patent application No. 202311803899.6 filed on December 25, 2023 and entitled "HIGH-CAPACITY AND LOW-RESIDUAL-SODIUM LAYERED CATHODE MATERIAL FOR SODIUM-ION BATTERY, PREPARATION METHOD THEREOF, AND SODIUM-ION BATTERY USING SAME", which is incorporated herein by reference in its entirety.

### TECHNICAL FIELD

The present application belongs to the technical field of sodium-ion batteries, and particularly relates to a high-capacity and low-residual-sodium layered cathode material for a sodium-ion battery, a preparation method thereof, and a sodium-ion battery using the same.

### BACKGROUND

In recent years, with the ever-increasing market demand for lithium-ion batteries, the demand for lithium resources has been continuously growing. However, owing to the geographically uneven distribution of lithium resources, the prices of lithium-ion batteries fluctuate considerably, thereby posing challenges for applications in some low-cost scenarios. Therefore, the development of novel energy storage systems with abundant resources and low costs to replace lithium-ion batteries is an urgent priority in current battery development.

Sodium ions have a similar electrochemical deintercalation/intercalation mechanism to lithium ions. Although sodium-ion batteries are inferior to lithium-ion batteries in terms of energy density, sodium-ion batteries still hold immense potential for applications in the small-power market and future large-scale energy storage. As the most critical component in a sodium-ion battery, a cathode material determines the electrochemical performance of the sodium-ion battery. Among various cathode materials, layered transition metal oxide cathode materials offer advantages such as high energy density, high reversible capacity, and high operating potential. Additionally, layered transition metal oxide cathode materials can be synthesized by a simple process that is compatible with existing production lines for high-nickel ternary materials. Therefore, layered transition metal oxide cathode materials are considered the most promising sodium-ion battery cathode materials for mass production.

However, current layered cathode materials for sodium-ion batteries suffer from issues such as high oxide impurity phase content and excessive residual sodium, which are detrimental to the capacity improvement of sodium-ion batteries. Moreover, excessive residual sodium can give rise to gas generation in sodium-ion batteries under high voltages, posing some safety risks.

### SUMMARY

The present application provides a high-capacity and low-residual-sodium layered cathode material for a sodium-ion battery, a preparation method thereof, and a sodium-ion battery using the same.

In a first aspect, the present application provides a high-capacity and low-residual-sodium layered cathode material for a sodium-ion battery, with a chemical formula of NaₐM1_{b}Ni_{w}FeₓMn_{y}Cu_{z}M2_{1-w-x-y-z}O₂, where M1 represents a first doping element including one or more selected from the group consisting of Ca, Li, and K; M2 represents a second doping element including one or more selected from the group consisting of Mg, Zn, Al, Zr, Ti, Nb, Mo, Y, Ta, W, Sr, Ba, B, and P; 0.85 ≤ a < 0.98, 0 < b ≤ 0.05, and 0.90 ≤ a + b ≤ 0.98; and w ≥ 0.1, x ≥ 0.1, y ≥ 0.1, z ≥ 0, and 0.9 ≤ w + x + y + z ≤ 1.0.

Optionally, the high-capacity and low-residual-sodium layered cathode material for the sodium-ion battery includes an oxide impurity phase; the oxide impurity phase includes one or more selected from the group consisting of NiO, CuO, and ZnO; and a mass percentage of the oxide impurity phase in the high-capacity and low-residual-sodium layered cathode material for the sodium-ion battery is no more than 2 wt%.

Optionally, the mass percentage of the oxide impurity phase is determined through X-ray diffraction (XRD) analysis and JADE software refinement; and the XRD analysis is conducted in a scanning range of 10° ≤ 2θ ≤ 80° at a scanning rate of about 5°/min.

Optionally, among contents of residual sodium on a surface of the high-capacity and low-residual-sodium layered cathode material for the sodium-ion battery, a Na₂CO₃ content is no more than 0.15 wt% and a NaOH content is no more than 0.10 wt%.

Optionally, a method for detecting the contents of residual sodium on the surface includes: selecting deionized water and an organic solvent as test solvents for residual alkalis; adding an acid solution for acid-base neutralization; and measuring a residual Na₂CO₃ content in the deionized water and a residual NaOH content in the organic solvent by potentiometric titration.

Optionally, the organic solvent includes one or more selected from the group consisting of methanol, ethanol, isopropanol, ethylene glycol, benzyl alcohol, and glycerol; and an acid used for the acid-base neutralization includes one or more selected from the group consisting of sulfuric acid, nitric acid, hydrochloric acid, acetic acid, and oxalic acid.

In a second aspect, the present application provides a method for preparing the high-capacity and low-residual-sodium layered cathode material for the sodium-ion battery, including the following steps:

(1) mixing a salt solution including Ni, a salt solution including Fe, and a salt solution including Mn or mixing a salt solution including Ni, a salt solution including Fe, a salt solution including Mn, and a salt solution including Cu in a specified ratio, and conducting a co-precipitation reaction to produce a Ni-Fe-Mn ternary or Ni-Fe-Mn-Cu quaternary precursor material; and

(2) mixing the Ni-Fe-Mn ternary or Ni-Fe-Mn-Cu quaternary precursor material obtained in the step (1) with a sodium source, an M1-containing compound, and an M2-containing compound, and sintering; and cooling to room temperature, crushing, and sieving to produce the high-capacity and low-residual-sodium layered cathode material for the sodium-ion battery.

Optionally, in the step (2), the sodium source includes one or more selected from the group consisting of Na₂CO₃, NaHCO₃, and NaOH; the M1-containing compound includes, but is not limited to, one or more selected from the group consisting of Li₂CO₃, K₂CO₃, CaCO₃, and CaO; and the M2-containing compound includes one or more selected from the group consisting of MgCO₃, MgO, ZnO, Al₂O₃, ZrO₂, TiO₂, Nb₂O₅, MoO₃, Y₂O₃, Ta₂O₅, WO₃, BaO, BaCO₃, SrCO₃, SrO, H₃BO₃, B₂O₃, H₃PO₄, Na₃PO₄, and NaH₂PO₄.

Optionally, in the step (2), the sintering is a two-stage sintering process including first-stage sintering at about 450°C to 850°C for about 3 h to 8 h and second-stage sintering at about 860°C to 1,000°C for about 10 h to 15 h; and a heating rate during the two-stage sintering process is about 1°C/min to 10°C/min.

Optionally, the heating rate is about 3°C/min.

Optionally, in the step (2), the sintering is conducted in compressed air with a dew point of about -50°C to -25°C.

In a third aspect, the present application provides a sodium-ion battery, where a cathode material in the sodium-ion battery is the high-capacity and low-residual-sodium layered cathode material for the sodium-ion battery described above or a high-capacity and low-residual-sodium layered cathode material for a sodium-ion battery prepared by the method described above.

Details of one or more embodiments of the present application will be illustrated in the following accompanying drawings and description. Other features, objectives, and advantages of the present application become evident in the specification, accompanying drawings, and claims.

### BRIEF DESCRIPTION OF THE DRAWINGS

To describe the technical solutions in the embodiments of the present application or in the prior art clearly, the accompanying drawings required for describing the embodiments or the prior art will be briefly described below. Apparently, the accompanying drawings in the following description show some embodiments of the present application, and a person of ordinary skill in the art may still derive other drawings from these accompanying drawings without creative efforts.
FIG. 1 is a scanning electron microscopy (SEM) image of a layered cathode material for a sodium-ion battery corresponding to Example 1;
FIG. 2 is an SEM image of a layered cathode material for a sodium-ion battery corresponding to Comparative Example 1;
FIG. 3 is an XRD pattern of the layered cathode material for the sodium-ion battery corresponding to Comparative Example 1;
FIG. 4 is an XRD pattern of a layered cathode material for a sodium-ion battery corresponding to Comparative Example 3;
FIG. 5 is an XRD pattern of the layered cathode material for the sodium-ion battery corresponding to Example 1; and
FIG. 6 is a comparison diagram of first-cycle electrochemical curves of coin cells corresponding to Example 1 and Comparative Example 1.

### DETAILED DESCRIPTION OF THE EMBODIMENTS

In order to facilitate the understanding of the present application, the present application is described in detail below in conjunction with the accompanying drawings of the specification and the preferred embodiments, but the scope of protection of the present application is not limited to the following specific embodiments.

Unless otherwise defined, all technical terms used hereinafter have the same meanings as commonly understood by those skilled in the art. The technical terms used herein are merely for the purpose of describing specific embodiments, and are not intended to limit the scope of protection of the present application.

For the layered cathode materials for sodium-ion batteries in the art, transition metal ions exhibit low solubility in sodium-based materials. If there is an insufficient sodium source in such a cathode material, oxide impurity phases will be formed in a cathode material for a sodium-ion battery and electrochemically active elements such as Ni and Cu will be precipitated, which affects the number of charge transfers of the cathode material during a charge-discharge process and deteriorates the reversible capacity of the cathode material. Additionally, oxides attached to a surface of the cathode material impede the conduction of ions/electrons in the cathode material, adversely affecting electrochemical performance. If there is a sufficient sodium source in such a cathode material, transition metal ions can be fully retained in a bulk structure to suppress the formation of oxide impurity phases, but excess sodium will remain on a surface of the cathode material to generate residual alkali substances such as sodium carbonate/sodium hydroxide, which are ionic compounds. In this case, cations and anions are densely arranged in crystal lattices through ionic bonds and lack electrical conductivity. As a result, interfacial resistance increases to hinder ion/electron conduction, such that a capacity is reduced, which compromises the performance of the cathode material. The presence of residual alkalis in an electrode can also trigger a dehydrofluorination reaction of a polyvinylidene fluoride (PVDF) binder. In this case, composite particles agglomerate to affect the adhesion in a coating, resulting in gelation of a slurry. Consequently, the electrode is prone to powdering and peeling after drying. A slightly alkaline slurry also corrodes an aluminum current collector to impede electron transport, and may even cause gas evolution under high voltage, thereby creating safety hazards.

Therefore, how to avoid the formation of oxide impurity phases while controlling a residual alkali content in a cathode material at a low level is an urgent and challenging problem to be solved in the industrialization process of high-performance cathode materials for sodium-ion batteries.

Based on the above technical problems, in a first aspect, some embodiments of the present application provide a high-capacity and low-residual-sodium layered cathode material for a sodium-ion battery, with a chemical formula of NaₐM1_{b}Ni_{w}FeₓMn_{y}Cu_{z}M2_{1-w-x-y-z}O₂, where M1 represents a first doping element including one or more selected from the group consisting of Ca, Li, and K; M2 represents a second doping element including one or more selected from the group consisting of Mg, Zn, Al, Zr, Ti, Nb, Mo, Y, Ta, W, Sr, Ba, B, and P; 0.85 ≤ a < 0.98, 0 < b ≤ 0.05, and 0.90 ≤ a + b ≤ 0.98; and w ≥ 0.1, x ≥ 0.1, y ≥ 0.1, z ≥ 0, and 0.9 ≤ w + x + y + z ≤ 1.0.

In the layered cathode material for the sodium-ion battery provided in these embodiments of the present application, an M1 element with a similar ionic radius or similar chemical properties to sodium is doped to occupy sodium sites during a high-temperature sintering process. A stoichiometry of the sodium element and the M1 doping element is adjusted to satisfy 0.90 ≤ a+b ≤ 0.98, such that the layered cathode material for the sodium-ion battery has a reduced residual alkali content and an appropriate sodium content. Moreover, the doping of the M1 element with a similar ionic radius or similar chemical properties to sodium leads to no significant oxide impurity phase, and enables a low residual alkali content and a high capacity in the layered cathode material for the sodium-ion battery.

In some embodiments, the high-capacity and low-residual-sodium layered cathode material for the sodium-ion battery includes an oxide impurity phase; the oxide impurity phase includes one or more selected from the group consisting of NiO, CuO, and ZnO; and a mass percentage of the oxide impurity phase in the high-capacity and low-residual-sodium layered cathode material for the sodium-ion battery is no more than 2 wt%.

In some embodiments, the mass percentage of the oxide impurity phase is determined through XRD analysis and JADE software refinement; and the XRD analysis is conducted in a scanning range of 10° ≤ 2θ ≤ 80° at a scanning rate of about 5°/min.

In some embodiments, among contents of residual sodium on a surface of the high-capacity and low-residual-sodium layered cathode material for the sodium-ion battery, a Na₂CO₃ content is no more than 0.15 wt% and a NaOH content is no more than 0.10 wt%.

In some embodiments, a method for detecting the contents of residual sodium on the surface includes the following steps: Deionized water and an organic solvent are selected as test solvents for residual alkalis. An acid solution is added for acid-base neutralization. A residual Na₂CO₃ content is measured in the deionized water and a residual NaOH content is measured in the organic solvent by potentiometric titration.

In some embodiments, the organic solvent includes one or more selected from the group consisting of methanol, ethanol, isopropanol, ethylene glycol, benzyl alcohol, and glycerol; and an acid used for the acid-base neutralization includes one or more selected from the group consisting of sulfuric acid, nitric acid, hydrochloric acid, acetic acid, and oxalic acid.

In a second aspect, some embodiments of the present application also provide a method for preparing the high-capacity and low-residual-sodium layered cathode material for the sodium-ion battery, including the following steps:
(1) A salt solution including Ni, a salt solution including Fe, and a salt solution including Mn are mixed or a salt solution including Ni, a salt solution including Fe, a salt solution including Mn, and a salt solution including Cu are mixed in a specified ratio, and a co-precipitation reaction is conducted to produce a Ni-Fe-Mn ternary or Ni-Fe-Mn-Cu quaternary precursor material.
(2) The Ni-Fe-Mn ternary or Ni-Fe-Mn-Cu quaternary precursor material obtained in the step (1) is mixed with a sodium source, an M1-containing compound, and an M2-containing compound, and sintering is conducted. A sintered product is cooled to room temperature, crushed, and sieved to produce the high-capacity and low-residual-sodium layered cathode material for the sodium-ion battery.

In some embodiments, in the step (2), the sodium source includes one or more selected from the group consisting of Na₂CO₃, NaHCO₃, and NaOH; the M1-containing compound includes, but is not limited to, one or more selected from the group consisting of Li₂CO₃, K₂CO₃, CaCO₃, and CaO; and the M2-containing compound includes one or more selected from the group consisting of MgCO₃, MgO, ZnO, Al₂O₃, ZrO₂, TiO₂, Nb₂O₅, MoO₃, Y₂O₃, Ta₂O₅, WO₃, BaO, BaCO₃, SrCO₃, SrO, H₃BO₃, B₂O₃, H₃PO₄, Na₃PO₄, and NaH₂PO₄.

In some embodiments, in the step (2), the sintering is a two-stage sintering process including first-stage sintering at about 450°C to 850°C for about 3 h to 8 h and second-stage sintering at about 860°C to 1,000°C for about 10 h to 15 h; and a heating rate during the two-stage sintering process is about 1°C/min to 10°C/min.

In some optional embodiments, the heating rate is about 3°C/min.

In some embodiments, in the step (2), the sintering is conducted in compressed air with a dew point of -50°C to -25°C. Controlling the dew point can further prevent interlayer sodium ions from precipitating out during a cooling process.

In a third aspect, some embodiments of the present application also provide a sodium-ion battery, where a cathode material in the sodium-ion battery is the high-capacity and low-residual-sodium layered cathode material for the sodium-ion battery described in the first aspect or a high-capacity and low-residual-sodium layered cathode material for a sodium-ion battery prepared by the method described in the second aspect.

Compared with the prior art, the present application has the following beneficial effects:
(1) In the present application, a stoichiometry of a sodium element and an M1 doping element is adjusted to satisfy 0.90 ≤ a + b ≤ 0.98, thereby reducing a residual alkali content in the layered cathode material for the sodium-ion battery. Additionally, an M1 element with a similar ionic radius or similar chemical properties to sodium is doped to occupy sodium layers after high-temperature calcination, thereby suppressing the formation of inactive oxide impurity phases when a sodium source is insufficient. As a result, the layered cathode material for the sodium-ion battery has no significant oxide impurity phase and exhibits the characteristics of low residual alkali content and high capacity.
(2) In the present application, feeding amounts of raw materials and additives are controlled and molar amounts of the sodium and doping element M1 are constrained, such that a proportion of an oxide impurity phase in a structure does not exceed 2 wt% and there is a residual Na₂CO₃ content of no more than 0.15 wt% and a residual NaOH content of no more than 0.10 wt% on the material surface. As a result, the high-capacity and low-residual-sodium layered cathode material for the sodium-ion battery can be produced.
(3) The present application employs a two-stage sintering process including first-stage sintering and second-stage sintering. During the first-stage sintering, a precursor is fully pre-oxidized to remove moisture and eliminate internal defects from the precursor. A precursor obtained after the defect repair is subjected to continuous grain fusion during the second-stage sintering at a high temperature to form an internally ordered phase structure, which can prevent oxide precipitation of the cathode material caused by local instability. Moreover, an ambient dew point is controlled within a specific range throughout the material preparation process to prevent sodium carbonate and an M1 element-containing raw material from absorbing ambient moisture, thereby avoiding elemental segregation caused by non-uniform mixing. In this way, the cathode material can be effectively protected, and interlayer sodium ions can be prevented from precipitating out during a cooling process, thereby avoiding an increase in a residual alkali content in the cathode material.

Unless otherwise specified, various raw materials, reagents, instruments, devices, and apparatuses used in the present application can be purchased from the market or can be prepared by the existing methods.

In the following examples, a proportion of an oxide impurity phase in a layered cathode material for a sodium-ion battery is determined through XRD analysis and JADE software refinement. The XRD analysis is conducted in a scanning range of 10° ≤ 2θ ≤ 80° at a scanning rate of about 5°/min. A lattice parameter c is obtained through TOPAS software refinement. Error values Rp and Rwp of a fitted curve are both less than 5%.

In the following examples, a method for determining surface residual sodium is as follows: A sample is dissolved separately in deionized water and a 99% ethanol solution, and titrated with an HCl solution. A residual Na₂CO₃ content is measured in the deionized water and a residual NaOH content is measured in the ethanol solution.

In the following examples, an assembly method and test conditions for a sodium-ion battery are as follows: A cathode material, acetylene black, and PVDF are mixed in a ratio of about 90:5:5, and N-methylpyrrolidone (NMP) is added to prepare a slurry. The slurry is vacuum-dried at 80°C and then processed into a positive electrode for the sodium-ion battery. The positive electrode is then assembled with a sodium sheet, a separator, and an electrolyte into a sodium-ion coin cell. A capacity of the sodium-ion coin cell is tested on a LAND battery test system with a voltage range of 2.0 V to 4.2 V and a current density of 20 mA/g.

### Example 1

In this example, a layered cathode material for a sodium-ion battery was provided, with a chemical formula of Na_{0.96}Ca_{0.01}Ni_{0.33}Fe_{0.33}Mn_{0.33}O₂. An oxide impurity phase in the layered cathode material was NiO. A mass percentage of the oxide impurity phase in the layered cathode material was about 1.01 wt%. Residual sodium contents in the layered cathode material were as follows: a Na₂CO₃ content was about 0.11 wt% and a NaOH content was about 0.09 wt%.

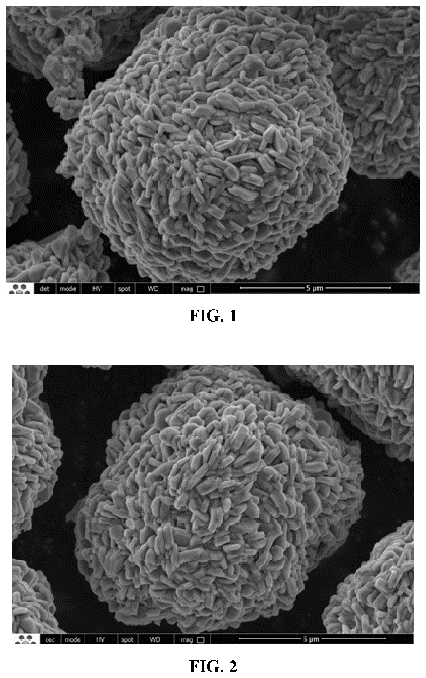

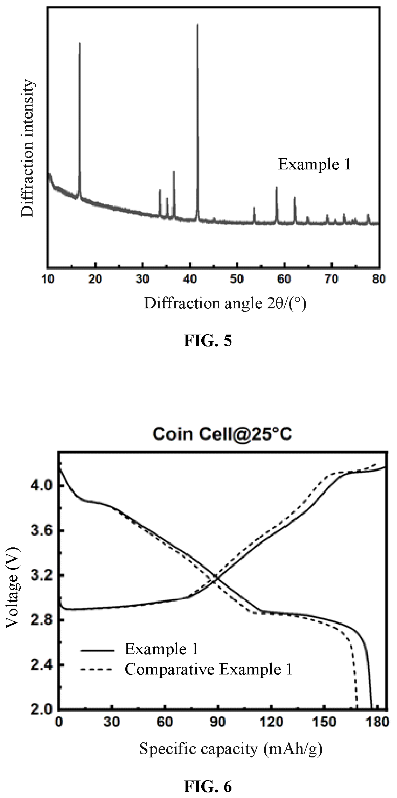

A method for preparing the layered cathode material for the sodium-ion battery in this example was provided, including the following steps:
(1) Preparation of a Ni-Fe-Mn precursor: According to a metal molar ratio of about 1:1:1, NiSO₄, MnSO₄, and FeSO₄ were prepared into a mixed metal salt solution with a concentration of about 1.0 mol/L. The mixed metal salt solution, a NaOH solution as a precipitating agent, and an NH₃·H₂O solution as a complexing agent were then fed into a reactor in a parallel flow manner, during which a pH of a system was controlled at 8.5 to 9.5. A resulting mixture was heated and stirred to allow a co-precipitation reaction. After the co-precipitation reaction was completed, a resulting slurry was subjected to solid-liquid separation to produce a solid. The solid was washed with deionized water and dried in an oven to produce the Ni-Fe-Mn precursor.
(2) The Ni-Fe-Mn precursor prepared in the step (1), Na₂CO₃, and CaCO₃ were dry-mixed thoroughly at an elemental molar ratio of about 1.00:0.96:0.01, then placed in a compressed air atmosphere (a dew point of compressed air was controlled at -45°C to -40°C), heated at a heating rate of about 5°C/min to about 450°C and sintered for about 6 h, then heated at a constant heating rate of about 3°C/min to about 900°C and sintered for about 12 h, and naturally cooled to room temperature to produce a sintered product. The sintered product was sieved through a 400-mesh sieve to produce the layered cathode material for the sodium-ion battery, with the chemical formula of Na_{0.96}Ca_{0.01}Ni_{0.33}Fe_{0.33}Mn_{0.33}O₂. An XRD pattern of the layered cathode material was shown in FIG. 5. A structure of the layered cathode material was a single O3 phase with no oxide impurity phase. An SEM image of the layered cathode material was shown in FIG. 1.

### Example 2

In this example, a layered cathode material for a sodium-ion battery was provided, with a chemical formula of Na_{0.92}Ca_{0.01}Ni_{0.33}Fe_{0.33}Mn_{0.33}O₂. An oxide impurity phase in the layered cathode material was NiO. A mass percentage of the oxide impurity phase in the layered cathode material was about 1.45 wt%. Residual sodium contents in the layered cathode material were as follows: a Na₂CO₃ content was about 0.05 wt% and a NaOH content was about 0.04 wt%.

A method for preparing the layered cathode material in this example was provided, including the following steps:

A step for preparing the Ni-Fe-Mn precursor was the same as the step in Example 1. The Ni-Fe-Mn precursor, Na₂CO₃, and CaCO₃ were dry-mixed at an elemental molar ratio of about 1.00:0.92:0.01. A step for preparing the layered cathode material was the same as the step in Example 1. The layered cathode material for the sodium-ion battery had the chemical formula of Na_{0.92}Ca_{0.01}Ni_{0.33}Fe_{0.33}Mn_{0.33}O₂.

### Example 3

In this example, a layered cathode material for a sodium-ion battery was provided, with a chemical formula of Na_{0.88}Ca_{0.02}Ni_{0.33}Fe_{0.33}Mn_{0.33}O₂. An oxide impurity phase in the layered cathode material was NiO. A mass percentage of the oxide impurity phase in the layered cathode material was about 1.78 wt%. Residual sodium contents in the layered cathode material were as follows: a Na₂CO₃ content was about 0.03 wt% and a NaOH content was about 0.02 wt%.

A method for preparing the layered cathode material in this example was provided, including the following steps:
A step for preparing the Ni-Fe-Mn precursor was the same as the step in Example 1. The Ni-Fe-Mn precursor, Na₂CO₃, and CaCO₃ were dry-mixed at an elemental molar ratio of about 1.00:0.88:0.02. A step for preparing the layered cathode material was the same as the step in Example 1. The layered cathode material for the sodium-ion battery had the chemical formula of Na_{0.88}Ca_{0.02}Ni_{0.33}Fe_{0.33}Mn_{0.33}O₂.

### Example 4

In this example, a layered cathode material for a sodium-ion battery was provided, with a chemical formula of Na_{0.96}Li_{0.01}Ni_{0.33}Fe_{0.33}Mn_{0.33}O₂. An oxide impurity phase in the layered cathode material was NiO. A mass percentage of the oxide impurity phase in the layered cathode material was about 1.11 wt%. Residual sodium contents in the layered cathode material were as follows: a Na₂CO₃ content was about 0.14 wt% and a NaOH content was about 0.08 wt%.

A method for preparing the layered cathode material in this example was provided, including the following steps:

A step for preparing the Ni-Fe-Mn precursor was the same as the step in Example 1. The Ni-Fe-Mn precursor, Na₂CO₃, and Li₂CO₃ were dry-mixed at an elemental molar ratio of about 1.00:0.96:0.01. A step for preparing the layered cathode material was the same as the step in Example 1. The layered cathode material for the sodium-ion battery had the chemical formula of Na_{0.96}Li_{0.01}Ni_{0.33}Fe_{0.33}Mn_{0.33}O₂.

### Example 5

In this example, a layered cathode material for a sodium-ion battery was provided, with a chemical formula of Na_{0.96}K_{0.01}Ni_{0.33}Fe_{0.33}Mn_{0.33}O₂. An oxide impurity phase in the layered cathode material was NiO. A mass percentage of the oxide impurity phase in the layered cathode material was about 1.09 wt%. Residual sodium contents in the layered cathode material were as follows: a Na₂CO₃ content was about 0.13 wt% and a NaOH content was about 0.06 wt%.

A method for preparing the layered cathode material in this example was provided, including the following steps:

A step for preparing the Ni-Fe-Mn precursor was the same as the step in Example 1. The Ni-Fe-Mn precursor, Na₂CO₃, and K₂CO₃ were dry-mixed at an elemental molar ratio of about 1.00:0.96:0.01. A step for preparing the layered cathode material was the same as the step in Example 1. The layered cathode material for the sodium-ion battery had the chemical formula of Na_{0.96}K_{0.01}Ni_{0.33}Fe_{0.33}Mn_{0.33}O₂.

### Example 6

In this example, a layered cathode material for a sodium-ion battery was provided, with a chemical formula of Na_{0.96}Li_{0.01}K_{0.01}Ni_{0.33}Fe_{0.33}Mn_{0.33}O₂. An oxide impurity phase in the layered cathode material was NiO. A mass percentage of the oxide impurity phase in the layered cathode material was about 0.92 wt%. Residual sodium contents in the layered cathode material were as follows: a Na₂CO₃ content was about 0.13 wt% and a NaOH content was about 0.06 wt%.

A method for preparing the layered cathode material in this example was provided, including the following steps:

A step for preparing the Ni-Fe-Mn precursor was the same as the step in Example 1. The Ni-Fe-Mn precursor, Na₂CO₃, Li₂CO₃, and K₂CO₃ were dry-mixed at an elemental molar ratio of about 1.00:0.96:0.01:0.01. A step for preparing the layered cathode material was the same as the step in Example 1. The layered cathode material for the sodium-ion battery had the chemical formula of Na_{0.96}Li_{0.01}K_{0.01}Ni_{0.33}Fe_{0.33}Mn_{0.33}O₂.

### Example 7

In this example, a layered cathode material for a sodium-ion battery was provided, with a chemical formula of Na_{0.96}Ca_{0.01}Ni_{0.40}Fe_{0.20}Mn_{0.40}O₂. An oxide impurity phase in the layered cathode material was NiO. A mass percentage of the oxide impurity phase in the layered cathode material was about 1.89 wt%. Residual sodium contents in the layered cathode material were as follows: a Na₂CO₃ content was about 0.14 wt% and a NaOH content was about 0.09 wt%.

A method for preparing the layered cathode material in this example was provided, including the following steps:
(1) Preparation of a Ni-Fe-Mn precursor: According to a metal molar ratio of about 4:2:4, NiSO₄, MnSO₄, and FeSO₄ were prepared into a mixed metal salt solution with a concentration of about 1.0 mol/L. The mixed metal salt solution, a NaOH solution as a precipitating agent, and an NH₃·H₂O solution as a complexing agent were then fed into a reactor in a parallel flow manner, during which a pH of a system was controlled at 8.5 to 9.5. A resulting mixture was heated and stirred to allow a co-precipitation reaction. After the co-precipitation reaction was completed, a resulting slurry was subjected to solid-liquid separation to produce a solid. The solid was washed with deionized water and dried in an oven to produce the Ni-Fe-Mn precursor.
(2) The Ni-Fe-Mn precursor prepared in the step (1), Na₂CO₃, and CaCO₃ were dry-mixed thoroughly at an elemental molar ratio of about 1.00:0.96:0.01, then placed in a compressed air atmosphere (a dew point was controlled at -30°C to -25°C), heated at a heating rate of about 5°C/min to about 450°C and sintered for about 6 h, then heated at a heating rate of about 3°C/min to about 900°C and sintered for about 12 h, and naturally cooled to room temperature to produce a sintered product. The sintered product was sieved through a 400-mesh sieve to produce the layered cathode material for the sodium-ion battery, with the chemical formula of Na_{0.96}Ca_{0.01}Ni_{0.40}Fe_{0.20}Mn_{0.40}O₂.

### Example 8

In this example, a layered cathode material for a sodium-ion battery was provided, with a chemical formula of Na_{0.96}Ca_{0.01}Ni_{0.25}Fe_{0.30}Mn_{0.25}Cu_{0.20}O₂. Oxide impurity phases in the layered cathode material were NiO and CuO. A mass percentage of the oxide impurity phases in the layered cathode material was about 1.56 wt%. Residual sodium contents in the layered cathode material were as follows: a Na₂CO₃ content was about 0.07 wt% and a NaOH content was about 0.05 wt%.

A method for preparing the layered cathode material in this example was provided, including the following steps:
A step for preparing the Ni-Fe-Mn-Cu precursor was the same as the step in Example 1, except that, according to a metal molar ratio of about 5:6:5:4, NiSO₄, MnSO₄, FeSO₄, and CuSO₄ were prepared into a solution with a concentration of about 1.0 mol/L. The Ni-Fe-Mn-Cu precursor, Na₂CO₃, and CaCO₃ were dry-mixed at an elemental molar ratio of about 1.00:0.96:0.01. A step for preparing the layered cathode material was the same as the step in Example 1. The layered cathode material for the sodium-ion battery had the chemical formula of Na0.96Ca0.01Ni0.25Fe0.30Mn0.25Cu0.20O2.

### Comparative Example 1

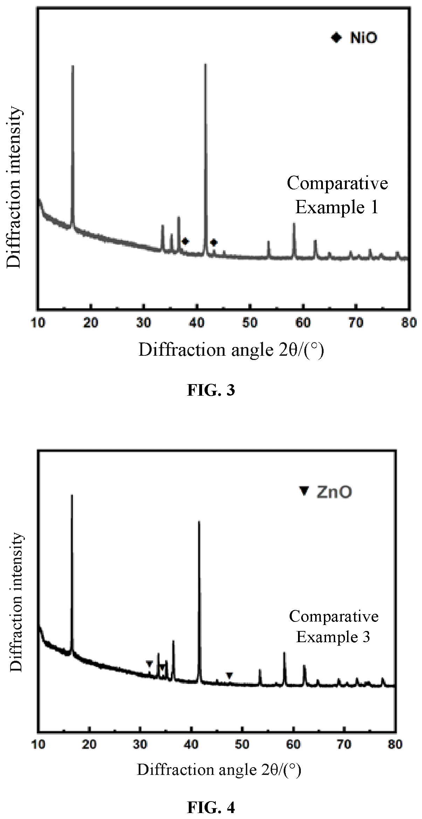

In this comparative example, a layered cathode material for a sodium-ion battery was provided, with a chemical formula of Na_{0.96}Ni_{0.33}Fe_{0.33}Mn_{0.33}O₂. An oxide impurity phase in the layered cathode material was NiO. A mass percentage of the oxide impurity phase in the layered cathode material was about 3.07 wt%. Residual sodium contents in the layered cathode material were as follows: a Na₂CO₃ content was about 0.10 wt% and a NaOH content was about 0.07 wt%. An XRD pattern of the layered cathode material in this comparative example was shown in FIG. 3. In addition to a structural diffraction peak of an O3 phase, a structure of the layered cathode material had an obvious NiO impurity phase peak. An SEM image of the layered cathode material was shown in FIG. 2.

A method for preparing the layered cathode material in this comparative example was provided, including the following steps:
A step for preparing the Ni-Fe-Mn precursor was the same as the step in Example 1. The Ni-Fe-Mn precursor and Na₂CO₃ were dry-mixed at an elemental molar ratio of about 1.00:0.96. A step for preparing the layered cathode material was the same as the step in Example 1. The layered cathode material for the sodium-ion battery had the chemical formula of Na_{0.96}Ni_{0.33}Fe_{0.33}Mn_{0.33}O₂.

### Comparative Example 2

In this comparative example, a layered cathode material for a sodium-ion battery was provided, with a chemical formula of Na_{0.96}Ni_{0.25}Fe_{0.30}Mn_{0.25}Cu_{0.20}O₂. Oxide impurity phases in the layered cathode material were NiO and CuO. A mass percentage of the oxide impurity phases in the layered cathode material was about 3.99 wt%. Residual sodium contents in the layered cathode material were as follows: a Na₂CO₃ content was about 0.13 wt% and a NaOH content was about 0.09 wt%.

A method for preparing the layered cathode material in this comparative example was provided, including the following steps:
A step for preparing the Ni-Fe-Mn-Cu precursor was the same as the step in Example 8. The Ni-Fe-Mn-Cu precursor and Na₂CO₃ were dry-mixed at an elemental molar ratio of about 1.00:0.96. A step for preparing the layered cathode material was the same as the step in Example 1. The layered cathode material for the sodium-ion battery had the chemical formula of Na_{0.96}Ni_{0.25}Fe_{0.30}Mn_{0.25}Cu_{0.20}O₂.

### Comparative Example 3

In this comparative example, a layered cathode material for a sodium-ion battery was provided, with a chemical formula of Na_{0.96}Ni_{0.31}Fe_{0.31}Mn_{0.31}Zn_{0.07}O₂. Oxide impurity phases in the layered cathode material were NiO and ZnO. A mass percentage of the oxide impurity phases in the layered cathode material was about 3.98 wt%. Residual sodium contents in the layered cathode material were as follows: a Na₂CO₃ content was about 0.14 wt% and a NaOH content was about 0.12 wt%. An XRD pattern of the layered cathode material in this comparative example was shown in FIG. 4. In addition to a structural diffraction peak of an O3 phase, a structure of the layered cathode material had an obvious ZnO impurity phase peak.

A method for preparing the layered cathode material in this comparative example was provided, including the following steps:
A step for preparing the Ni-Fe-Mn-Zn precursor was the same as the step in Example 1, except that a Ni, Mn, Fe, and Zn-containing sulfate or nitrate solution with a concentration of about 1.0 mol/L was prepared according to a corresponding molar ratio. The Ni-Fe-Mn-Zn precursor and Na₂CO₃ were dry-mixed at an elemental molar ratio of about 1.00:0.96. A step for preparing the layered cathode material was the same as the step in Example 1. The layered cathode material for the sodium-ion battery had the chemical formula of Na_{0.96}Ni_{0.31}Fe_{0.31}Mn_{0.31}Zn_{0.07}O₂.

### Comparative Example 4

In this comparative example, a layered cathode material for a sodium-ion battery was provided, with a chemical formula of Na_{0.88}Ca_{0.01}Ni_{0.33}Fe_{0.33}Mn_{0.33}O₂. An oxide impurity phase in the layered cathode material was NiO. A mass percentage of the oxide impurity phase in the layered cathode material was about 3.95 wt%. Residual sodium contents in the layered cathode material were as follows: a Na₂CO₃ content was about 0.04 wt% and a NaOH content was about 0.03 wt%.

A method for preparing the layered cathode material in this comparative example was provided, including the following steps:
A step for preparing the Ni-Fe-Mn precursor was the same as the step in Example 1. The Ni-Fe-Mn precursor, Na₂CO₃, and CaCO₃ were dry-mixed at an elemental molar ratio of about 1.00:0.88:0.01. A step for preparing the layered cathode material was the same as the step in Example 1. The layered cathode material for the sodium-ion battery had the chemical formula of Na_{0.88}Ca_{0.01}Ni_{0.33}Fe_{0.33}Mn_{0.33}O₂.

### Comparative Example 5

In this comparative example, a layered cathode material for a sodium-ion battery was provided, with a chemical formula of Na_{1.00}Ca_{0.01}Ni_{0.33}Fe_{0.33}Mn_{0.33}O₂. An oxide impurity phase in the layered cathode material was NiO. A mass percentage of the oxide impurity phase in the layered cathode material was about 1.43 wt%. Residual sodium contents in the layered cathode material were as follows: a Na₂CO₃ content was about 0.19 wt% and a NaOH content was about 0.12 wt%.

A method for preparing the layered cathode material in this comparative example was provided, including the following steps:
A step for preparing the Ni-Fe-Mn precursor was the same as the step in Example 1. The Ni-Fe-Mn precursor, Na₂CO₃, and CaCO₃ were dry-mixed at an elemental molar ratio of about 1.00:1.00:0.01. A step for preparing the layered cathode material was the same as the step in Example 1. The layered cathode material for the sodium-ion battery had the chemical formula of Na_{1.00}Ca_{0.01}Ni_{0.33}Fe_{0.33}Mn_{0.33}O₂.

**Table 1 Performance test data of the layered cathode materials prepared in Examples 1 to 8 and Comparative Examples 1 to 5**

| | Chemical formula | Oxide content (wt%) | Na₂CO₃ (wt%) | NaOH (wt%) | Discharge capacity (mAh/g) | Lattice parameter c (Å) |
|---|---|---|---|---|---|---|
| Example 1 | Na_{0.96}Ca_{0.01}Ni_{0.33}Fe_{0.33}Mn_{0.33}O₂ | 1.01 | 0.11 | 0.09 | 176.8 | 16.0045 |
| Example 2 | Na_{0.92}Ca_{0.01}Ni_{0.33}Fe_{0.33}Mn_{0.33}O₂ | 1.45 | 0.05 | 0.04 | 175.4 | 16.0065 |
| Example 3 | Na_{0.88}Ca_{0.o2}N_{10.33}Fe_{0.33}Mn_{0.33}O₂ | 1.78 | 0.03 | 0.02 | 173.3 | 16.0123 |
| Example 4 | Na_{0.96}Li_{0.01}Ni_{0.33}Fe_{0.33}Mn_{0.33}O₂ | 1.11 | 0.14 | 0.08 | 177.1 | 16.0041 |
| Example 5 | Na_{0.96}K_{0.01}Ni_{0.33}Fe_{0.33}Mn_{0.33}O₂ | 1.09 | 0.13 | 0.06 | 174.7 | 16.0052 |
| Example 6 | Na_{0.96}Li_{0.01}K_{0.01}Ni_{0.33}Fe_{0.33}Mn_{0.33}O₂ | 0.92 | 0.11 | 0.05 | 174.2 | 16.0027 |
| Example 7 | Na_{0.96}Ca_{0.01}Ni_{0.40}Fe_{0.20}Mn_{0.40}O₂ | 1.89 | 0.14 | 0.09 | 176.2 | 15.9874 |
| Example 8 | Na_{0.96}Ca_{0.01}Ni_{0.25}Fe_{0.30}Mn_{0.25}Cu_{0.20}O₂ | 1.56 | 0.07 | 0.05 | 171.1 | 16.0105 |
| Comparative Example 1 | Na_{0.96}Ni_{0.33}Fe_{0.33}Mn_{0.33}O₂ | 3.07 | 0.10 | 0.07 | 168.5 | 16.0103 |
| Comparative Example 2 | Na_{0.96}Ni_{0.25}Fe_{0.30}Mn_{0.25}Cu_{0.20}O₂ | 3.99 | 0.13 | 0.09 | 160.2 | 16.0122 |
| Comparative Example 3 | Na_{0.96}Ni_{10.31}Fe_{0.31}Mn_{0.31}Zn_{0.07}O₂ | 3.98 | 0.14 | 0.12 | 165.7 | 16.0109 |
| Comparative Example 4 | Na_{0.88}Ca_{0.01}Ni_{0.33}Fe_{0.33}Mn_{0.33}O₂ | 3.50 | 0.04 | 0.03 | 167.5 | 16.0123 |
| Comparative Example 5 | Na_{1.00}Ca_{0.01}Ni_{0.33}Fe_{0.33}Mn_{0.33}O₂ | 1.43 | 0.19 | 0.12 | 166.8 | 16.0072 |

According to the above table, after sintering in Comparative Example 1, an impurity phase proportion of NiO in the material is about 3.07%, and a specific discharge capacity at 2.0 V to 4.2 V is about 168.5 mAh/g. After doping with about 0.01 mol of Ca (Example 1), the impurity phase proportion of NiO in the material decreases to about 1.01%, and the specific discharge capacity increases to about 176.8 mAh/g. This is because elements with similar chemical properties or similar ionic radii to sodium can be doped into octahedral sites occupied by sodium ions in a sodium-deficient O3 phase structure, thereby ensuring structural stability and confining transition metals within a layered structure to provide the oxidation/reduction charges required during a charge-discharge process. As a result, the high-capacity and low-residual-sodium layered cathode material for the sodium-ion battery is obtained. The decline in the lattice parameter c indicates that the Ca element has been successfully incorporated into the sodium layer to reduce the electrostatic repulsion between adjacent oxygen layers. According to Comparative Examples 2 and 3, when Cu and Zn, as transition metals, are selected as doping elements for substitution, the material still cannot achieve a high specific capacity. It can be seen from Examples 2 to 8 that, when 0.90 ≤ a + b ≤ 0.98 is satisfied under different sodium contents and different proportions of metal elements Ca, Li, and K, doped samples have an oxide impurity phase proportion significantly reduced, resulting in high-capacity layered cathode materials for sodium-ion batteries. Based on Comparative Example 4, when a + b < 0.9 in the chemical formula of NaₐM1_{b}Ni_{w}FeₓMn_{y}Cu_{z}M2_{1-w-x-y-z}O₂, the number of ions occupying the sodium layer is too small to maintain structural stability. Consequently, transition metals are dissolved, and there is a relatively high proportion of inactive oxides, which impairs the capacity. In Comparative Example 5, when Ca is doped into a sodium-sufficient material, namely, a + b > 0.98, Ca cannot be incorporated into the sodium layer, or the sodium layer is occupied such that Na ions escape to the surface to generate Na₂CO₃/NaOH. As a result, a residual alkali content of the material is too high, which impairs the specific capacity. In summary, when a sodium-deficient O3 phase material is doped at sodium sites under corresponding process conditions to satisfy: 0.90 ≤ a + b ≤ 0.98, oxide impurity phase proportion ≤ 2 wt%, residual Na₂CO₃ content ≤ 0.15 wt%, and residual NaOH content ≤ 0.10 wt%, a high specific discharge capacity can be achieved for the material.

The technical features of the above examples can be arbitrarily combined. For brevity of description, not all possible combinations of the technical features of the above examples are described. However, any combinations of these technical features should be construed as falling within the scope defined by the specification as long as there is no contradiction among the combinations.

The above examples merely illustrate some implementations of the present application, and the descriptions thereof are specific and detailed, but shall not be construed as limiting the scope of the present application. It should be noted that those of ordinary skill in the art can further make several variations and improvements without departing from the concept of the present application, and these variations and improvements all fall within the scope of protection of the present application. Therefore, the scope of protection of the present application shall be subject to the appended claims.

## Claims

1. A high-capacity and low-residual-sodium layered cathode material for a sodium-ion battery, with a chemical formula of NaₐM1_{b}Ni_{w}FeₓMn_{y}Cu_{z}M2_{1-w-x-y-z}O₂, wherein M1 represents a first doping element comprising one or more selected from the group consisting of Ca, Li, and K; M2 represents a second doping element comprising one or more selected from the group consisting of Mg, Zn, Al, Zr, Ti, Nb, Mo, Y, Ta, W, Sr, Ba, B, and P; 0.85 ≤ a < 0.98, 0 < b ≤ 0.05, and 0.90 ≤ a + b ≤ 0.98; and w ≥ 0.1, x ≥ 0.1, y ≥ 0.1, z ≥ 0, and 0.9 ≤ w + x + y + z ≤ 1.0.

2. The high-capacity and low-residual-sodium layered cathode material for the sodium-ion battery according to claim 1, wherein the high-capacity and low-residual-sodium layered cathode material for the sodium-ion battery comprises an oxide impurity phase; the oxide impurity phase comprises one or more selected from the group consisting of NiO, CuO, and ZnO; and a mass percentage of the oxide impurity phase in the high-capacity and low-residual-sodium layered cathode material for the sodium-ion battery is no more than 2 wt%.

3. The high-capacity and low-residual-sodium layered cathode material for the sodium-ion battery according to claim 2, wherein the mass percentage of the oxide impurity phase is determined through X-ray diffraction (XRD) analysis and JADE software refinement; and the XRD analysis is conducted in a scanning range of 10° ≤ 2θ ≤ 80° at a scanning rate of about 5°/min.

4. The high-capacity and low-residual-sodium layered cathode material for the sodium-ion battery according to any one of claims 1 to 3, wherein among contents of residual sodium on a surface of the high-capacity and low-residual-sodium layered cathode material for the sodium-ion battery, a Na₂CO₃ content is no more than 0.15 wt% and a NaOH content is no more than 0.10 wt%.

5. A method for preparing the high-capacity and low-residual-sodium layered cathode material for the sodium-ion battery according to any one of claims 1 to 4, comprising following steps:
(1) mixing a salt solution comprising Ni, a salt solution comprising Fe, and a salt solution comprising Mn or mixing a salt solution comprising Ni, a salt solution comprising Fe, a salt solution comprising Mn, and a salt solution comprising Cu in a specified ratio, and conducting a co-precipitation reaction to produce a Ni-Fe-Mn ternary or Ni-Fe-Mn-Cu quaternary precursor material; and
(2) mixing the Ni-Fe-Mn ternary or Ni-Fe-Mn-Cu quaternary precursor material obtained in the step (1) with a sodium source, an M1-containing compound, and an M2-containing compound, and sintering to produce the high-capacity and low-residual-sodium layered cathode material for the sodium-ion battery.

6. The method according to claim 5, wherein in the step (2), the sodium source comprises one or more selected from the group consisting of Na₂CO₃, NaHCO₃, and NaOH; the M1-containing compound comprises one or more selected from the group consisting of Li₂CO₃, K₂CO₃, CaCO₃, and CaO; and the M2-containing compound comprises one or more selected from the group consisting of MgCO₃, MgO, ZnO, Al₂O₃, ZrO₂, TiO₂, Nb₂O₅, MoO₃, Y₂O₃, Ta₂O₅, WO₃, BaO, BaCO₃, SrCO₃, SrO, H₃BO₃, B₂O₃, H₃PO₄, Na₃PO₄, and NaH₂PO₄.

7. The method according to claim 5 or 6, wherein in the step (2), the sintering is a two-stage sintering process comprising first-stage sintering at 450°C to 850°C for about 3 h to 8 h and second-stage sintering at about 860°C to 1,000°C for about 10 h to 15 h; and a heating rate during the two-stage sintering process is about 1°C/min to 10°C/min.

8. The method according to any one of claims 5 to 7, wherein in the step (2), the sintering is conducted in compressed air with a dew point of about -50°C to -25°C.

9. A sodium-ion battery, wherein a cathode material in the sodium-ion battery is the high-capacity and low-residual-sodium layered cathode material for the sodium-ion battery according to any one of claims 1 to 4 or a high-capacity and low-residual-sodium layered cathode material for a sodium-ion battery prepared by the method according to any one of claims 5 to 8.
